# EUROPÄISCHE PATENTSCHRIFT

(11) **EP 1 493 681 B1**
(45) Veröffentlichungstag und Bekanntmachung des Hinweises auf die Patenterteilung: **22.11.2006**
(21) Anmeldenummer: 03015186.4
(22) Anmeldetag: 04.07.2003
(51) Int. Cl.: B65D 39/00, B29C 47/36, B29C 47/06, B29C 47/88, B29C 47/28

(54) **Verfahren und Vorrichtung zur Herstellung synthetischer Flaschenverschlüsse**
Method and apparatus for manufacturing synthetic bottle stoppers
Procédé et dispositif pour la fabrication de bouchons de bouteille synthétiques

(43) Veröffentlichungstag der Anmeldung: 05.01.2005
(73) Patentinhaber: Volpini de Maestri, Anton, 9800 Spittal / Drau (AT)
(72) Erfinder: Volpini, Johannes Dr., 9871 Seeboden (AT); Diblik, Ing. Kurt, 9800 Spittal / Drau (AT)
(74) Vertreter: Vinazzer, Edith

(56) Entgegenhaltungen:
- EP-A- 1 022 303
- EP-A- 1 211 048
- US-A1- 2002 180 083
- US-B1- 6 221 451
- US-B1- 6 355 320

## Beschreibung

Die Erfindung betrifft ein Verfahren zur Herstellung synthetischer Flaschenverschlüsse bestehend aus einem zylindrischen Kernelement aus einem geschäumten Kunststoffmaterial und einer mit diesem verbundenen und dieses ummantelnden, aus einem kompakten Kunststoffmaterial bestehenden Außenschicht, wobei die Kunststoffschmelzen in einem ersten und einem zweiten Extruder hergestellt und in einem Verteilerwerkzeug derart verbunden werden, dass ein ummantelter Schmelzestrang austritt, welcher abgezogen und nach dem Aushärten geschnitten und angefast wird.

Die Erfindung betrifft ferner eine Coextrusionsanlage zur Herstellung synthetischer Flaschenverschlüsse aus einem aus geschäumten Kunststoff bestehenden, zylindrischen Kernelement mit einer mit diesem verbundenen und dieses ummantelnden, aus einem kompakten Kunststoffmaterial bestehenden Außenschicht, mit einem ersten Extruder zur Herstellung der Kunststoffschmelze für das Kernelement, einem zweiten Extruder zur Herstellung der Kunststoffschmelze für die Außenschicht, einem Verteilerwerkzeug zum Zusammenführen der Schmelzen in der Art, dass die Schmelze für das Kernelement von der Schmelze für die Außenschicht ringförmig umgeben wird, einer Austrittsdüse, einer Kühlstrecke, einem Abzug sowie einer Schneide- und Fasenfräsvorrichtung.

Aus der US-B1-6,355,320 ist ein durch Extrusion hergestellter, zylindrisch geformter Flaschenverschluss bekannt, dessen Kunststoffmaterial eine Dichte zwischen 100 kg/m³ und 500 kg/m³ aufweist. Um einen derart geschlossenzelligen Kunststoffverschluss herzustellen, wird neben einem chemischen Treibmittel auch ein physikalisches Treibmittel, vorzugsweise flüssiges Kohlendioxid verwendet, welches eine besondere Zuführung und ein besonders sorgfältiges Einmischen in die Polymerschmelze erfordert. Dabei wird die Kunststoffschmelze gegen Ende ihres Transportweges durch den Extruder gekühlt, wobei im gesamten Extrusionsprozess ein gewisser Druck aufrecht erhalten werden muss, um das Kohlendioxid in seiner superkritischen Phase und in der Polymerschmelze gelöst zu halten.

Die US 2002/0180083 A1 befasst sich mit einem Verfahren zur Herstellung eines synthetischen Falschenverschlusses, welcher mehrschichtig aufgebaut ist und durch Coextrusion hergestellt wird. Die Kunststoffmaterialien für die Schichten weisen unterschiedliche physikalische Eigenschaften auf. Bei einer Ausführungsvariante wird ein dreischichtiger synthetischer Flaschenverschluss durch zweimaliges koaxiales Ummanteln eines Kernelements gebildet.

Aus der EP-A1-1 022 303 sind ein Verfahren und eine Vorrichtung zur Herstellung von Polysterenschaumblöcken bekannt, wobei einem Extruder Polystyren mit den üblichen Additiven und der Schmelze im Extruder Kohlendioxid und Ethanol über Dosierpumpen zugeführt werden. An den ersten Extruder schließt ein statischer Mischer an, wobei zwischen dem Extruder und diesem statischen Mischer der Schmelze H₂O zugeführt wird. An den ersten statischen Mischer schließt ein zweiter Extruder (dynamischer Mischer) an, welcher die Aufgabe hat, die zugeführten flüssigen Additive in der Schmelze zu dispergieren und gleichzeitig die Schmelze zu kühlen. Anschließend wird die Schmelze nochmals statisch gemischt und schließlich dem Extrusionskopf zugeführt.

Aus der EP-B-1 051 334 ist ein synthetischer Flaschenverschluss bekannt, welcher aus einem zylindrisch geformten Kernelement aus einem geschäumten, geschlossenzelligen Kunststoffmaterial besteht und eine aus einem vorzugsweise ebenfalls geschäumten Kunststoffmaterial bestehende Außenschicht aufweist, die die zylindrische Oberfläche des Kernelementes peripher umgibt und mit dieser kraftschlüssig verbunden ist. Diese Druckschrift bezieht sich auch auf ein Verfahren zur Herstellung eines derartigen Flaschenverschlusses, welches gemäß den Patentansprüchen im Wesentlichen darin bestehen soll, dass ein zylindrisches Kunststoffkernelement extrudiert wird, dessen zylindrische Oberfläche mit einer separaten und unabhängigen Schicht eines Kunststoffmaterials verbunden wird, um einen Durchfluss von Flüssigkeit zwischen dem Kernelement und der peripheren Schicht zu verhindern. Das hergestellte zweischichtige Erzeugnis wird in einer senkrecht zur Mittelachse des Kernelementes verlaufenden Ebene geschnitten, wodurch ein mehrschichtiger, thermoplastischer Flaschenverschluss hergestellt wird, der die gewünschte Länge zum Einführen und Halten in der Öffnung eines Behälterhalses aufweist. Erwähnt ist, dass die periphere Schicht und das geschäumte Kunststoffkernelement durch Coextrusion von Kunststoffschmelzen hergestellt werden können.

Bei der Coextrusion handelt es sich grundsätzlich um ein Verfahren, das schon lange bekannt ist. So sind beispielsweise im "Handbuch der Kunststoff-Extrusionstechnik II, Extrusionsanlagen", 1986 (Hanser Verlag), verschiedene Coextrusionsverfahren zur Herstellung geschäumter Halbzeuge aus zwei verschiedenen Masseströmen mit geschäumtem Kern, unter Verwendung von Einschneckenextruderanlagen erwähnt. Seite 443, Abschnitt 13.5.1, Einschneckenextruderanlagen, beschreibt den Grundaufbau einer solchen Anlage, welche neben dem Extruder mit Vormischeinrichtung, eine Kalibrier- und Kühleinrichtung, sowie Abzug-, Säge- und Ablageeinrichtungen umfasst. Erwähnt ist auch, dass die auf diesem Gebiet erarbeiteten Lösungen Ergebnisse intensiver Entwicklung sind und überwiegend patentrechtlich geschützt waren beziehungsweise sind.

Synthetische Flaschenverschlüsse sollen nun mit technisch vertretbarem Aufwand und auf wirtschaftliche Weise herstellbar sein, sowie bezüglich ihrer Eigenschaften, insbesondere des Rückverstellverhaltens, der Ausziehkräfte und der Dichtheit, dem Naturkork zumindest gleichkommen, insbesondere diesem überlegen sein. Naturkork ist als Ausgangsmaterial für Flaschenverschlüsse zunehmend rar geworden, daher auch zunehmend gefragter und vergleichsweise teuer. Bei Naturkork gibt es außerdem sehr starke Qualitätsunterschiede und dementsprechend auch große Preisdifferenzen. Die Qualitätsunterschiede machen es häufig schwierig, einen dauerhaft dichten Verschluss einer Flasche zu gewährleisten, andererseits soll aber das Öffnen der Flasche, also das Herausziehen des Stoppels, nicht zu schwierig zu sein. Von Bedeutung ist auch, dass sich synthetische Flaschenverschlüsse von Stoppeln aus natürlichem Kork äußerlich möglichst wenig zu unterscheiden haben. Diesbezüglich sind die bislang bekannten, extrudierten Kunststoffverschlüsse gegenüber den durch Spritzgießen erzeugten im Vorteil.

Die bereits erwähnte EP-B- 1 051 334 führt bestimmte Qualitätsmerkmale der geoffenbarten synthetischen Verschlüsse an, wie beispielsweise eine homogene Verteilung der geschlossenen Zellen, eine weitgehend übereinstimmende Zellgröße etc. Es sind somit spezifischen Parameter dafür verantwortlich, dass der Flaschenverschluss genau spezifizierte physikalische Eigenschaften aufweist und so dem Wunsch des Kunden entsprechend ausgeführt ist. Dem Kunden, beispielsweise dem Weinproduzenten, ist es unter anderem wichtig, beim Verschluss seiner Flaschen nicht mehr von Zufälligkeiten in der Qualität der angelieferten Stoppel abhängig zu sein. Wichtig für den Kunden ist ferner, bei der Verwendung von Kunststoffverschlüssen seine Flaschenverschlussmaschinen weiter verwenden zu können.

Auf welche Weise Flaschenverschlüsse der geforderten und erwünschten Qualität herstellbar sind, lässt sich der EP-A- 1 051 334 nicht entnehmen. Die lediglich grundsätzliche Erwähnung der Verwendung eines Coextrusionsverfahrens ist, wie sich auch aus der oben erwähnten Fachliteratur eindeutig ergibt, nicht dazu geeignet, dem Fachmann zu vermitteln, auf welche Weise ein Produkt der erwünschten Qualität hergestellt werden kann.

Hier setzt nun die Erfindung ein, deren Aufgabe darin besteht, ein Verfahren und eine Vorrichtung zur Verfügung zu stellen, die es gestatten, synthetische Flaschenverschlüsse aus einem geschäumten Kernelement und einer kompakten Außenschicht mit reproduzierbaren Qualitätsmerkmalen auf eine wirtschaftliche Weise herstellen zu können.

Was das Verfahren betrifft wird die gestellte Aufgabe erfindungsgemäß dadurch gelöst, dass sämtliche Ausgangsmaterialien für die Kunststoffschmelze des Kernelementes dem ersten Extruder zugeführt werden, wobei die in diesem Extruder gebildete die Kunststoffschmelze für das Kernelement zwischen dem ersten Extruder und dem Verteilerwerkzeug gemischt und anschließend gekühlt wird und nach der Kühlung, unmittelbar vor der Ummantelung im Verteilerwerkzeug, nochmals gemischt wird.

Was die Vorrichtung betrifft wird die gestellte Aufgabe dadurch gelöst, dass zwischen dem ersten Extruder und dem Verteilerwerkzeug eine Werkzeugkombination aus einem statischen Mischer, einem Kühler und einem zweiten statischen Mischer, in dieser Reihenfolge, angeordnet ist.

Von besonderer Bedeutung dafür, dass im Kernelement eine gleichmäßige Zellgröße und eine gleichmäßige Verteilung der Zellen entsteht, ist, dass in der vom Extruder entlassenen Schmelze sichergestellt wird, dass die Temperatur über dem Querschnitt so gleichmäßig wie möglich ist und dass durch eine Abkühlung der Schmelze, durch den rapiden Druckabfall nach dem Düsenaustritt, ein optimaler Aufschäumprozess möglich ist, wird die Schmelze nach der Kühlung, unmittelbar vor dem Verteilerwerkzeug, nochmals gemischt, tritt sie mit einer über ihren Querschnitt weitgehend konstanten Temperatur in das Verteilerwerkzeug, wobei knapp vor der Austrittsdüse der Strang mit der Kunststoffschmelze der Außenschicht umhüllt wird.

Eine weitere Maßnahme, die Einfluss auf eine gleichmäßige Zellstruktur im erstellten Kernelement hat, wird bereits beim Zuführen der Ausgangsmaterialien für die Schmelze des Kernelementes getroffen. Diese Maßnahme besteht darin, dass chemisches Treibmittel direkt in den bereits dosierten Granulatstrom für die Schmelze des Kernelementes eingemischt wird. Gerade diese Maßnahme gewährleistet ein sehr gleichmäßiges Einmischen des Treibmittels.

Beim erfindungsgemäßen Verfahren beträgt der Schmelzedruck vor der Schneckenspitze des ersten Extruders, je nach Durchsatzleistung, zwischen 130 bar bis 200 bar, beim Düsenaustritt in der Größenordnung von 50 bar bis 100 bar bar. Diese Maßnahme beeinflusst neben der eingesetzten Treibmittelmenge den Schäumgrad und damit das spezifische Gewicht, die Zellstruktur, die Zellgröße und die Zellverteilung des Kernelementes und trägt dazu bei, dem fertigen Produkt die gegenüber dem Naturkork verbesserten Eigenschaften zu verleihen.

Weitere Merkmale, Vorteile und Einzelheiten der Erfindung werden anhand der Zeichnung näher beschrieben. Dabei zeigen
Fig. 1 schematisch die einzelnen Stationen eine Vorrichtung zur Herstellung eines synthetischen Flaschenverschlusses und
Fig. 2 eine Ansicht eines erfindungsgemäß hergestellten Flaschenverschlusses.

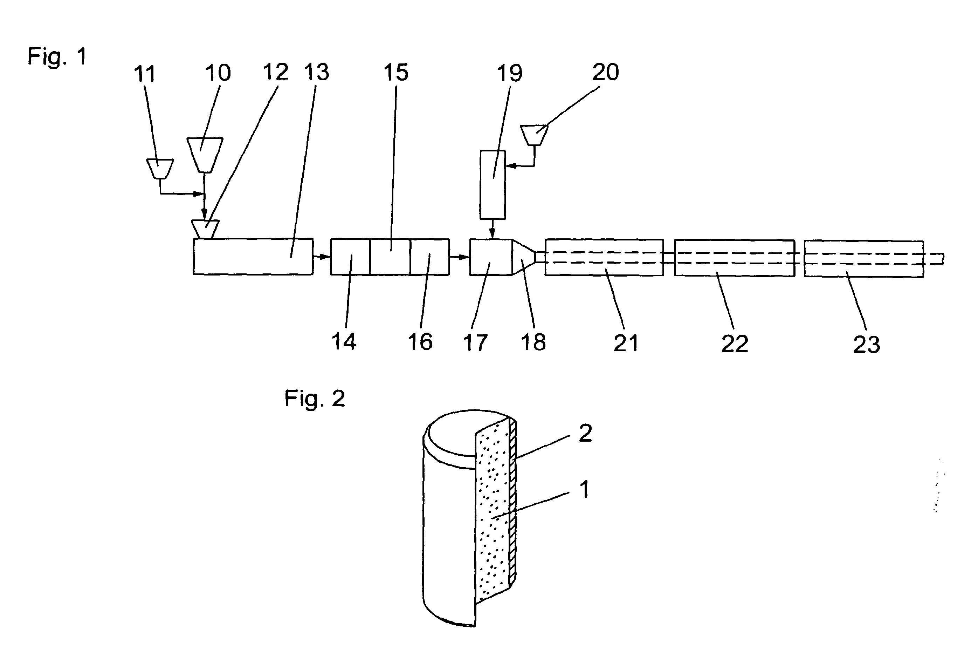

Fig. 2 zeigt einen Flaschenverschluss in der Form eines kreiszylindrischen Stoppels mit einem zylindrischen Kernelement 1 aus einem geschäumten, geschlossenzelligen Kunststoffmaterial und aus einer das Kernelement 1 umgebenden und mit diesem fest verbundenen Außenschicht 2 aus einem kompakten und ungeschäumten Kunststoffmaterial. Die Außenschicht 2 weist eine Dicke zwischen 0,5 und 2 mm auf. Die mittlere Zellgröße des Kunststoffmaterials des Kernelementes 1 beträgt zwischen 0,01 mm und 0,05 mm. Die Zellendichte beträgt zwischen 1.000.000/cm³ und 8.000.000/cm³.

Die Erfindung befasst sich mit der Herstellung eines zum Naturkork alternativen synthetischen Flaschenverschlusses, welcher bezüglich seiner Eigenschaften, beispielsweise gleichbleibend hohe Qualität, Dichtheit, Rückstellverhalten sowie konstanter Ausziehkräfte, dem Naturkork zumindest gleich, insbesondere aber überlegen sein soll. In diesem Zusammenhang ist vor allem das Verfahren zur Herstellung des Flaschenverschlusses von besonderer Bedeutung, wobei aber auch die Ausgangsstoffe eine wichtige Rolle haben.

Als Basismaterial für das Kernelement 1 kommen verschiedene Kunststoffmaterialien in Frage, insbesondere Polyethylen, Polybutadien, Polybutylen, thermoplastische Elastomere, Ethylen-Acryl-Copolymere, Ethylenvinylacetatcopolymere und dergleichen. Zum Aufschäumen des Kunststoffmaterials wird eines der üblichen chemischen Treibmittel, beispielsweise modifiziertes Azodicarbonamid, polymergebunden, welches unter der Handelsbezeichnung Tracel erhältlich ist, verwendet.

Basismaterialien für die Herstellung der kompakten Außenschicht 2 sind ein thermoplastisches Elastomer sowie zumindest ein Farb-Batch, ein mit Farbpartikeln versetztes Kunststoffmaterial. Als thermoplastische Elastomere eignen sich insbesondere solche auf der Basis von Polyesterester, Olefin-Copolymere, EthylenNinylacetat, Ethylen/Vinylacetat-Polyvinyldenchlorid, Nitril/Butadien-Kautschuk/Polypropylen, Ethylen/Propylen-Terpolymer/Propylen, Naturkautschuk/Polypropylen, Ethylen/Propylen-Terpolymer/Propylen (vernetzt und unvernetzt), Styrolcopolymere, Stryrol/Butadien, Styrol/Butadien/Styrol, Styrol/Ethenbuten/Styrol, Styrolllsopren, Styrol/Butylen/Stryol-Propylen, Styrol/Ethylen-Butylen/Styrol-Polyphenylenether, Styrol/Ethylen-Butylen/Styrol-Polypropylen, Styrol/Butadien/Styrol-Propylen, Polyurethan, Polyesterurethan, Polyetheresterurehtan, Polyetherurethan und Aliphatisches Polyurethan. Das Kunststoffmaterial des Farb-Batch wird durch lebensmittelechte Farbstoffe auf die Farbe natürlichen Korkes eingefärbt. Wichtig sind Verträglichkeit und Mischbarkeit des bzw. der Farb-Batch(es) mit dem Basis-Kunststoffmaterial der Außenschicht 2, um eine optimale Qualität des hergestellten Produktes zu gewährleisten.

Besonders naturgetreu lässt sich die Farbe von natürlichem Kork durch eine Mischung eines beigen Farb-Batch mit einem schwarzen Effekt-Farb-Batch nachstellen. Beide Farb-Batches sind Kunststoffgranulate. Sowohl die für das Kernelement 1 als auch die Außenschicht 2 verwendeten Farbpigmente sind vorzugsweise organische Farbpigmente, insbesondere diverse Füllstoffe, das Trägermaterial sollte zum Basis-Kunststoff des Kernelementes und der Außenschicht kompatibel sein. Anorganische Farbpigmente eignen sich gut als Keimbildner beim Schäumen.

Anhand der Fig. 1 werden nun die erfindungsgemäße Vorrichtung und das erfindungsgemäße Verfahren zur Herstellung der Flaschenverschlüsse näher beschrieben.

In einer gravimetrischen Dosiereinrichtung 10 werden das Granulat des Basis-Kunststoffmaterials und die Granulate der Farb-Batches für die Herstellung des Kernelementes 1 oberhalb des Extrudereinzuges 12 des Hauptextruders 13 verwogen und vermischt. Das chemische Treibmittel wird über eine separate Dosiereinrichtung 11 direkt dem von der gravimetrischen Dosiereinrichtung 10 kommenden Granulatstrom eingemischt. Diese Maßnahme gewährleistet eine optimale Verteilung der Ausgangsmaterialien im Hauptextruder 13 und verhindert eine unerwünschte Entmischung derselben.

Die Mischung aus den Ausgangsmaterialien wird im Hauptextruder 13 aufgeschmolzen und homogenisiert. Der Extruder 13 kann einer der üblichen Extruder mit einer Dreizonen-Schnecke und einem Kompressionsverhältnis von 2,5:1 sein. Der Schmelzedruck vor der Schneckenspitze beträgt je nach Durchsatzleistung zwischen 130 bar und 200 bar, die Schmelzetemperatur beträgt in der Größenordnung von 130 °C bis 160 C°. Um eine möglichst gleichmäßige Temperaturverteilung der Schmelze über ihren Querschnitt zu erzielen, wird die Schmelze vom Hauptextruder 13 unmittelbar in einen statischen Mischer 14 entlassen, anschließend in einem Schmelzekühler 15 gekühlt und schließlich in einem zweiten statischen Mischer 16 nochmals gemischt. Im Kühler 15 wird der Schmelze vorzugsweise in zwei voneinander getrennten Kreisläufen und mittels Öltemperiergeräten Wärme entzogen.

Vom statischen Mischer 16 wird die Schmelze in ein Verteilerwerkzeug 17 überführt, in welchem beispielsweise über einen Herzkurvenverteiler die Außenschicht 2 als dünnes Rohr auf den das Kernelement 1 bildenden Hauptstrang aufgebracht wird. Die Ausgangsmaterialien für die Außenschicht 2 werden gleichfalls mittels einer gravimetrischen Dosiereinrichtung 20 oberhalb des Einzuges eines zweiten Extruders 19 verwogen und vermischt. Im Coextruder 19 wird diese Mischung aufgeschmolzen und homogenisiert. Als Schnecke im Coextruder 19 wird insbesondere eine Barriereschnecke verwendet, die es gestattet, die Schmelzetemperatur und die Scherwärme gering zu halten. Die mittels des Herzkurvenverteilers im Werkzeug 17 rohrförmig geformte Schmelze wird um die das Kernelement 1 bildende Schmelze gelegt. Der ummantelte Schmelzestrang tritt durch eine Austrittsdüse 18 nach außen. Durch den abrupten Druckabfall beim Austritt aus der Düse 18 beginnt der Aufschäumprozess des Kernelementmaterials. Der Schäumgrad, welcher das spezifische Gewicht, die Zellstruktur, die Zellgröße und die Zellverteilung im Kernelement 1 bestimmt, wird einerseits durch die verwendete Treibmittelmenge bestimmt, andererseits aber auch durch die Verweilzeit der Schmelze im Extruder, die Temperaturverhältnisse, die Druckführung, die Fließweggestaltung und die Düsengeometrie. Das Druckgefälle des Schmelzedruckes bewegt sich von 130 bar bis 200 bar im Bereich der Schneckenspitze des Extruders 13 bis zu etwa 50 bar bis 100 bar im Bereich des Austrittes aus der Düse 18 und hat, wie sich herausgestellt hat, auch einen gewissen Einfluss auf die Qualität des fertigen Produktes, insbesondere hinsichtlich der Homogenität der Verteilung der Zellen.

Der aus der Austrittsdüse 18 austretende coextrudierte Strang wird mittels einer Abzugseinrichtung 22 unter Zug wegtransportiert und dabei gleichzeitig bezüglich seiner Maße stabilisiert und justiert. Unmittelbar nach der Düse 18 durchläuft der coextrudierte Strang vorerst noch einen Kühler 21, welcher bevorzugt ein Wasserkühler ist, und wird in diesem soweit gekühlt, dass die Abzugseinrichtung keine Strangdeformationen mehr verursachen kann. Die Abzugseinrichtung 22 ist beispielsweise ein Raupenabzug, bestehend aus PU-beschichteten und mit V-Nuten gekerbten Segmenten. Der Raupenabzug 22 wird möglichst drehzahlkonstant betrieben, um keine Schwankungen des Produktes bezüglich des Durchmesser zu verursachen. Der coextrudierte Strang wird nun über einen gleichzeitig als Pufferstrecke dienenden weiteren Kühler 23 zu einer nicht mehr dargestellten Schneidevorrichtung geführt, die geschnittenen Flaschenverschlüsse werden einer Fasenschleifvorrichtung zugeführt und bis zur Verpackung entsprechend konfektioniert.

Nach dem erfindungsgemäßen Verfahren wurden beispielsweise die Flaschenverschlüsse unter Verwendung folgender Ausgangsmaterialien hergestellt: (die % Angaben beziehen sich auf 100 Gewichtsprozent)

### Außenschicht (kompakt, unqeschäumt):

| | |
|---|---|
| Thermoplastisches Elastomer | 93,5 % bis 97,5 % |
| Farb-Batch, beige | 2 % bis 4 % |
| Effekt-Farb-Batch, schwarz | 0,5 % bis 1,5 % |

### Kernelement (geschäumt):

| | |
|---|---|
| EVA-Copolymer | 85 % |
| LDPE | 12,5 % bis 14 % |
| Chemisches Treibmittel | 0,5 % bis 2 % |
| Farb-Batch, beige | 0,5 % bis 1,5% |

Die hergestellten synthetischen Flaschenverschlüsse wurden mit Naturkorken bezüglich einiger Eigenschaften verglichen:

### Eigenschaften

| | max. Kompressions-kraft N | Rückstellverhalten (von 15,5 mm) * | | | | max. Ausziehkraft N |
|---|---|---|---|---|---|---|
| | | 10 sek. | 15 min | 1 h | 24 h | |
| Synthischer Verschluss | 234 N | 97,9 % | 98,9 % | 99,1 % | 99,4 % | 250 N |
| Naturkork | 352 N | 94,7 % | 96,2 % | 98,3 % | 99,5 % | 185 N |

| | | | | | | |
|---|---|---|---|---|---|---|
| * Messmethode: Kompression des Durchmessers von 22 mm auf 15,5 mm mit 2 mm/sec; der Durchmesser 15,5 mm wird 15 sec lang gehalten, danach mit 10 mm/sec entspannt, nach den angegebenen Zeitabständen wird die Durchmesserzunahme in Prozent auf den Ausgangdurchmesser von 22 mm abgenommen. | | | | | | |

### Kapillarwirkung

Beide Verschlüsse werden mit der Stirnseite in ein 5 mm hoch gefülltes Gefäß über 24 Stunden eingetaucht. Anschließend wird die Eindringhöhe der Flüssigkeit vermessen.

| | max. Kapillarwirkung in mm |
|---|---|
| Synthetischer Verschluss | 0,00 |
| Naturkork | 20,5 |

## Patentansprüche

1. Verfahren zur Herstellung synthetischer Flaschenverschlüsse bestehend aus einem zylindrischen Kernelement aus einem geschäumten Kunststoffmaterial und einer mit diesem verbundenen und dieses ummantelnden, aus einem kompakten und ungeschäumten Kunststoffmaterial bestehenden Außenschicht, wobei die Kunststoffschmelzen in einem ersten und einem zweiten Extruder hergestellt und in einem Verteilerwerkzeug derart verbunden werden, dass ein ummantelter Schmelzestrang austritt, welcher abgezogen und nach dem Aushärten geschnitten und angefast wird,
**dadurch gekennzeichnet,**
**dass** sämtliche Ausgangsmaterialien für die Kunststoffschmelze des Kernelementes (1) dem ersten Extruder (13) zugeführt werden, wobei die in diesem Extruder (13) gebildete Kunststoffschmelze für das Kernelement (1) zwischen dem ersten Extruder (13) und dem Verteilerwerkzeug (17) nochmals gemischt, anschließend gekühlt und nach der Kühlung, unmittelbar vor der Ummantelung im Verteilerwerkzeug (17), wieder gemischt wird.

2. Verfahren nach Anspruch 1, **dadurch gekennzeichnet, dass** vor dem Extrudereinzug (12) ein chemisches Treibmittel mittels einer separaten Dosiereinrichtung (11) direkt in den bereits dosierten Granulatstrom für die Schmelze des Kernelementes (1) eingemischt wird.

3. Verfahren nach Anspruch 1 oder 2, **dadurch gekennzeichnet, dass** der Schmelzedruck der Schmelze für das Kernelement (1) derart eingestellt wird, dass er an der Schneckenspitze des Extruders (13) zwischen 130 bar und 200 bar beträgt und im Bereich der Austrittsdüse (18) auf 50 bar bis 100 bar gesunken ist.

4. Verfahren nach einem der Ansprüche 1 bis 3, **dadurch gekennzeichnet, dass** die aus Kunststoffgranulaten bestehenden Ausgangsmaterialien für das Kernelement (1) und der Außenschicht (2) gravimetrisch dosiert werden.

5. Verfahren nach einem der Ansprüche 1 bis 4, **dadurch gekennzeichnet, dass** zu den Ausgangsmaterialien für die Außenschicht (2) und / oder das Kunststoffelement (1) zumindest ein Kunststoffgranulat mit Farbpigmenten gehört, wobei dieses mit dem Basis-Kunststoffmaterial kompatibel ist und wobei die Farbpigmente insbesondere organische Farbpigmente sind.

6. Verfahren nach einem der Ansprüche 1 bis 5, **dadurch gekennzeichnet, dass** als Kunststoffmaterial für das Kernelement (1) zumindest einer der Materialien aus der Gruppe Polyethylen, Polybutadien, Polybutylen, thermoplastische Elastomere, Ethylen-Acryl-Copolymere, Ethylenvinylacetatcopolymere und dergleichen, gewählt wird.

7. Verfahren nach einem der Ansprüche 1 bis 5, **dadurch gekennzeichnet, dass** als Kunststoffmaterial für die kompakte Außenschicht (2) zumindest eines der thermoplastischen Elastomere aus der Gruppe Polyesterester, Olefin-Copolymere, Ethylen/Vinylacetat, Ethylen/Vinylacetat-Polyvinyldenchlorid, Nitril/Butadien-Kautschuk/Polypropylen, Ethylen/Propylen-Terpolymer/Propylen, Naturkautschuk/Polypropylen, Ethylen/Propylen-Terpolymer/Propylen (vernetzt und unvernetzt), Styrolcopolymere, Stryrol/Butadien, Styrol/Butadien/Styrol, Styrol/Ethenbuten/Styrol, Styrol/Isopren, Styrol/Butylen/Stryol-Propylen, Styrol/Ethylen-Butylen/Styrol-Polyphenylenether, Styrol/Ethylen-Butylen/Styrol-Polypropylen, Styrol/Butadien/Styrol-Propylen, Polyurethan, Polyesterurethan, Polyetheresterurehtan, Polyetherurethan und Aliphatisches Polyurethan, gewählt wird.

8. Coextrusionsanlage zur Herstellung synthetischer Flaschenverschlüsse aus einem aus geschäumten Kunststoff bestehenden, zylindrischen Kernelement mit einer mit diesem verbundenen und dieses ummantelnden, aus einem kompakten und ungeschäumten Kunststoffmaterial bestehenden Außenschicht, mit einem ersten Extruder zur Herstellung der Kunststoffschmelze für das Kernelement, einem zweiten Extruder zur Herstellung der Kunststoffschmelze für die Außenschicht, einem Verteilerwerkzeug zum Zusammenführen der Schmelzen in der Art, dass die Schmelze für das Kernelement von der Schmelze für die Außenschicht ringförmig umgeben wird, einer Austrittsdüse, einer Kühlstrecke, einem Abzug sowie einer Schneide- und Fasenfräsvorrichtung,
**dadurch gekennzeichnet,**
**dass** zwischen dem ersten Extruder (13) und dem Verteilerwerkzeug (17) eine Werkzeugkombination aus einem statischen Mischer (14), einem Kühler (15) und einem zweiten statischen Mischer (16), in dieser Reihenfolge, angeordnet ist.

9. Coextrusionsanlage nach Anspruch 8, **dadurch gekennzeichnet, dass** gravimetrische Dosiereinrichtungen (10, 20) für die Kunststoff-Ausgangsmaterialien der Schmelzen für das Kernelement (1) und die Außenschicht (2) vorgesehen sind.

10. Coextrusionsanlage nach Anspruch 8 oder 9, **dadurch gekennzeichnet, dass** eine separate Dosiereinrichtung (11) für das chemische Treibmittel der Schmelze für das Kernelement (1) vorgesehen ist, derart, dass das chemische Treibmittel in den von der gravimetrischen Dosiereinrichtung (10) kommenden Kunststoff-Granulatstrom eingebracht wird.

## Claims

1. A process for producing synthetic bottle closures consisting of a cylindrical core element made of a foamed plastic material and an outer layer connected to and surrounding said core element, consisting of a compact and non-foamed plastic material, wherein the plastic melts are produced in a first and a second extruder and bonded in a distributor tool in such a manner that a sheathed melt strand emerges, which is drawn and, after curing, is cut and chamfered, **characterised in that** all the starting materials for the plastic' melt of the core element (1) are fed to the first extruder (13), wherein the plastic melt formed in this extruder (13) for the core element (1) is mixed again between the first extruder (13) and the distributor tool (17), then cooled, and after cooling is mixed again directly before sheathing in the distributor tool (17).

2. The process according to claim 1, **characterised in that** before the extruder feed (12) a chemical propellant is mixed directly into the already-metered granular material stream for the melt of the core element (1) by means of a separate metering device (11).

3. The process according to claim 1 or 2, **characterised in that** the melt pressure of the melt for the core element (1) is adjusted in such a manner that it is between 130 bar and 200 bar at the screw tip of the extruder (13) and has dropped to 50 bar to 100 bar in the area of the outlet nozzle (18).

4. The process according to any one of claims 1 to 3, **characterised in that** the starting materials for the core element (1) and the outer layer (2), consisting of plastic granular material, are metered gravimetrically.

5. The process according to any one of claims 1 to 4, **characterised in that** the starting materials for the outer layer (2) and/or the core element (1) include at least one plastic granular material with colour pigments, wherein this is compatible with the base plastic material and wherein the colour pigments are in particular organic colour pigments.

6. The process according to any one of claims 1 to 5, **characterised in that** at least one of the materials from the group polyethylene, polybutadiene, polybutylene, thermoplastic elastomers, ethylene acrylic copolymers, ethylene vinyl acetate copolymers and similar is selected as plastic material for the core element (1).

7. The process according to any one of claims 1 to 5, **characterised in that** at least one of the thermoplastic elastomers from the group polyester ester, olefin copolymers, ethylene/vinyl acetate, ethylene/vinyl acetate polyvinylidene chloride, nitrile/butadiene rubber/polypropylene, ethylene/propylene terpolymer/propylene, natural rubber/polypropylene, ethylene/propylene terpolymer/propylene (cross-linked and non-cross-linked), styrene copolymers, styrene/butadiene, styrene/butadiene/styrene, styrene/ethene butene/styrene, styrene/isoprene, styrene/butylene/styrene propylene, styrene/ethylene butylene/styrene polyphenylene ether, styrene/ethylene butylene/styrene polypropylene, styrene/butadiene/styrene propylene, polyurethane, polyester urethane, polyester ester urethane, polyether urethane and aliphatic polyurethane, is selected as plastic material for the compact outer layer (2).

8. A co-extrusion system for producing synthetic bottle closures from a cylindrical core element consisting of a foamed plastic with a compact outer layer consisting of a non-foamed plastic material, which is connected to said core element and surrounds said core element, comprising a first extruder for producing the plastic melt for the core element, a second extruder for producing the plastic melt for the outer layer, a distributor tool for combining the melts in such a manner that the melt for the core element is surrounded in annular fashion by the melt for the outer layer, an outlet nozzle, a cooling section, a draw-off means as well as a cutting and chamfering and milling device, **characterised in that** a tool combination comprising a static mixer (14), a cooler (15) and a second static mixer (16) in this order is arranged between the first extruder (13) and the distributor tool (17).

9. The co-extrusion system according to claim 8, **characterised in that** gravimetric metering devices (10, 20) are provided for the plastic starting materials of the melts for the core element (1) and the outer layer (2).

10. The co-extrusion system according to claim 8 or 9, **characterised in that** a separate metering device (11) is provided for the chemical propellant of the melt for the core element (1) in such a manner that the chemical propellant is incorporated into the plastic granular material stream coming from the gravimetric metering device (10).

## Revendications

1. Procédé de fabrication de bouchons de bouteilles synthétiques composés d'un élément central cylindrique en mousse de matière plastique et d'une couche extérieure rattachée à celui-ci et l'enrobant, composée de matière plastique compacte non en mousse, dans lequel les coulées de matière plastique sont fabriquées dans une première et une deuxième extrudeuse et reliées dans un outil distributeur de manière à ce que sorte une barre coulée enrobée qui est extraite puis coupée et chanfreinée après son durcissement,
**caractérisé en ce que**
toutes les matières initiales pour la coulée de matière plastique de l'élément central (1) sont acheminées à la première extrudeuse (13), la coulée de matière plastique constituée dans cette extrudeuse (13) pour l'élément central (1) étant à nouveau mélangée entre la première extrudeuse (13) et l'outil distributeur (17), puis refroidie et de nouveau mélangée après le refroidissement directement avant l'enrobage dans l'outil distributeur (17).

2. Procédé selon la revendication 1, **caractérisé en ce qu'**avant l'entrée de l'extrudeuse (12), un agent propulseur est mélangé au moyen d'un dispositif de dosage séparé (11) directement dans le flux de granulés déjà dosé pour la coulée de l'élément central (1).

3. Procédé selon la revendication 1 ou 2, **caractérisé en ce que** la pression de coulée pour l'élément central (1) est établie de manière à atteindre à la pointe de vis de l'extrudeuse (13) un niveau de 130 bar à 200 bar et à descendre au niveau de la buse de sortie (18) à un niveau de 50 bar à 100 bar.

4. Procédé selon une des revendications 1 à 3, **caractérisé en ce que** les matières initiales composées de granulés en matière plastique pour l'élément central (1) et la couche extérieure (2) sont dosées par gravimétrie.

5. Procédé selon une des revendications 1 à 4, **caractérisé en ce que** fait partie des matières initiales pour la couche extérieure (2) et/ou l'élément en matière plastique (1) au moins un granulé de matière plastique à pigments colorés, celui-ci étant compatible avec la matière plastique de basé et les pigments colorés étant notamment des pigments colorés organiques.

6. Procédé selon une des revendications 1 à 5, **caractérisé en ce qu'**on choisit comme matière plastique pour l'élément central (1) au moins un des matériaux du groupe polyéthylène, polybutadiène, polybutylène, élastomères thermoplastiques, copolymères d'éthylène-acrylique, copolymères d'éthylèneacétate de vinyle et similaires.

7. Procédé selon une des revendications 1 à 5, **caractérisé en ce qu'**on choisit comme matière plastique pour la couche extérieure compacte (2) au moins un des élastomères thermoplastiques du groupe esters de polyester, copolymères d'oléfine, éthylène/acétate de vinyle, éthylène/acétate de vinyle-chlorure de polyvinyledène, nitrile/butadiène-caoutchouc/polypropylène, éthylène/propylène-terpolymère/propylène, caoutchouc naturel/poly-propylène, éthylène/propylène-terpolymère/propylène (réticulé et non réticulé), copolymères de styrène, styrène/butadiène, styrène/butadiène/styrène, styrène/ éthylènebutène/styrène, styrène/isoprène, styrène/ butylène/styrène-propylène, styrène/éthylène-butylène/ styrène-propylène, styrène/éthylène-butylène/styrène-polyphylèneéther, styrène/éthylène-butylène/styrène-polypropylène, styrène/butadiène/ styrène-propylène, polyuréthane, polyesteruréthane, polyétherester-uréthane et polyuréthane aliphatique.

8. Installation dé coextrusion pour la fabrication de bouchons de bouteilles en matière plastique à partir d'un élément central cylindrique composé d'une mousse de matière plastique et comportant une couche extérieure rattachée à celui-ci et l'enrobant, composée de matière plastique compacte non en mousse, une première extrudeuse pour la fabrication de la coulée de matière plastique pour l'élément central, une deuxième extrudeuse pour la fabrication de la coulée de matière plastique pour la couche extérieure, un outil distributeur pour regrouper les coulées de manière à ce que la coulée pour l'élément central soit entourée en forme d'anneau par la coulée pour la couche extérieure, une buse de sortie, un segment de refroidissement, un extracteur ainsi qu'un dispositif de découpe et de fraisage de chanfreins,
**caractérisée en ce que**,
entre la première extrudeuse (13) et l'outil distributeur (17), est disposée une combinaison d'outils composée d'un mélangeur statique (14), d'un refroidisseur (15) et d'un deuxième mélangeur statique (16), dans cet ordre.

9. Installation de coextrusion selon la revendication 8, **caractérisée en ce qu'**il est prévu des dispositifs de dosage gravimétriques (10, 20) pour les matières plastiques initiales des coulées pour l'élément central (1) et la couche extérieure (2).

10. Installation de coextrusion selon la revendication 8 ou 9, **caractérisée en ce qu'**il est prévu un dispositif de dosage séparé (11) pour l'agent propulseur chimique de la coulée pour l'élément central (1) de manière à ce que de l'agent propulseur chimique soit intégré dans le flux de granulés de matière plastique provenant du dispositif de dosage gravimétrique (10).
